# DEMANDE DE BREVET EUROPEEN

(11) **EP 4 781 834 A1**
(43) Date de publication de la demande: **29.07.2026**
(21) Numéro de dépôt: 25153358.4
(22) Date de dépôt: 22.01.2025
(51) Int. Cl.: A23J 3/22, A23J 3/26, A23P 30/20, A23N 17/00

(54) **PROCÉDÉ DE CONTRÔLE DE LA PRODUCTION D ANALOGUES DE VIANDE PAR EXTRUSION HUMIDE AVEC MISE EN UVRE DE GAZ**

(71) Demandeur: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40476 Düsseldorf (DE)
(72) Inventeur: Aviles, Carlos, 75008 PARIS (FR); Kasten, Christine, 40476 Düsseldorf (DE); Sporing, Marc, 40476 Düsseldorf (DE)
(74) Mandataire: Air Liquide

(57) **Abrégé**

Un procédé de fabrication de produits alimentaires transformés à base de protéines végétales, par extrusion humide dans une vis d'extrusion, avec mise en oeuvre d'un gaz en au moins une zone de la vis, notamment de produits considérés comme des analogues de la viande animale, se caractérisant en ce que l'injection de gaz est contrôlée via une régulation du volume de gaz injecté par rapport à une valeur de consigne souhaitée.

## Description

La présente invention concerne les procédés et dispositifs de fabrication de produits alimentaires transformés à base de protéines végétales, par extrusion humide dans une vis d'extrusion, avec mise en œuvre de gaz, les produits visés ayant pour but de remplacer la viande animale.

Qu'elles soient d'origine animale ou végétale, les protéines offrent de nombreuses fonctionnalités texturantes, gélifiantes et émulsifiantes.

Le marché est en croissance et les fournisseurs ne cessent d'innover pour explorer de nouvelles fonctionnalités et applications.

Les experts considèrent que la demande mondiale de viande devrait s'accroitre d'environ 30% à l'horizon 2030, et on peut noter déjà qu'en 50 ans, la consommation de viande dans le monde a été multipliée par 4 pour atteindre 320 millions de tonnes: la consommation de volailles a même été multipliée par 8, celle de porcs par 3 à 4 et celles de ruminants (bovins et ovins) par 2.

Pour satisfaire les besoins grandissants du monde de l'élevage, le secteur des aliments du bétail va croissant, favorisant ainsi la croissance en volume du marché des protéines.

Dans ce contexte, les protéines végétales connaissent un net regain d'intérêt, en lien avec les préoccupations de développement durable, et les consommateurs sont à la fois à la recherche de produits enrichis en protéines, mais aussi d'alternatives à la viande : les industries produisant des protéines végétales ont ainsi fait d'énormes avancées pour proposer des produits mixtes, voire même 100% végétaux, offrant des qualités gustatives et visuelles que l'on peut qualifier d'équivalentes.

Or, il apparait que les producteurs de produits alimentaires à base de protéines végétales partent des protéines déshydratées, en tant que matières premières, et ont besoin d'assurer d'une part la réhydratation de ces protéines matières premières, et d'autre part le formage du produit final, de façon fiable et reproductible.

A titre illustratif, les protéines végétales « texturées » ou « texturisées » (dites PVT) de soja sont produites à partir de farine de soja déshuilée, cuite sous pression et déshydratée. Il en résulte un aliment extrêmement riche en protéines, jusqu'à 50 g de protéines pour 100 g de produit sec, considéré comme savoureux et bon marché, très prisé des végétariens. Les PVT se présentent généralement sous forme de granules plus ou moins grosses, elles prennent une texture similaire à du bœuf haché après cuisson. Elles peuvent être assaisonnées de multiples façons.

Dans ce contexte, la recette de base traditionnelle de fabrication de tels produits consiste en un mélange de protéines (concentrat et/ou isolat d'une ou de plusieurs sources) et d'eau.

Les sources de protéines utilisées peuvent être notamment les suivantes : soja, pois, pois chiche, lentille, haricot ou d'autres légumineuses, ou bien un mélange binaire ou de plusieurs sources différentes.

Selon le type de protéines mis en œuvre il peut y avoir ajout de fibres végétales. Les recettes peuvent aussi comprendre de l'huile, des arômes et des colorants.

Les analogues de viande sont des produits qui imitent la texture, la couleur et le goût de la viande d'origine animale. En général, ce type de produits sont fabriqués par extrusion humide à partir de concentrés ou d'isolats protéiques. Ce procédé utilise des hautes températures et hautes pressions pour transformer un mélange de concentré protéique et d'eau en une structure fibreuse qui ressemble à la viande animale. L'un des challenges principaux de l'industrie des analogues de viande d'origine végétale est la présence de goûts indésirables comme des notes vertes, herbacées ou de haricot. La littérature s'accorde aujourd'hui pour dire qu'une partie importante de ces goûts sont générés par l'oxydation des acides gras insaturés présents dans les graines utilisées pour la production de concentrés protéiques.

Il existe alors un bon nombre de méthodes pour réduire la quantité de molécules qui apportent des goûts indésirables, avec des efficacités plus ou moins bonnes. Néanmoins, dans tous les cas, des quantités plus ou moins importantes d'acides gras insaturés restent dans la composition des concentrés protéiques. Sous les conditions utilisées lors de l'extrusion humide, l'oxydation est donc accélérée, créant des nouveaux composés qui peuvent impacter le goût des analogues de viande.

A l'étape d'extrusion humide, le masquage des goûts indésirables est la technique utilisée pour améliorer le goût des analogues de viande. Des masqueurs de goût peuvent être ajoutés à la formulation initiale, avant l'extrusion. Une autre manière de procéder consiste à faire tremper les analogues de viande dans un bouillon contenant les agents de masquage et les arômes utilisés pour apporter les goûts souhaités. Dans les deux cas, l'ajout d'additifs dans la formulation du produit impacte la liste d'ingrédients affichée sur le produit.

Comme on le verra plus en détails dans ce qui suit, la présente invention s'attache à proposer une solution constituant une aide à la formulation des analogues de viande qui permet de réduire la quantité d'arômes ajoutés. La solution consiste à éviter le contact, avec de l'oxygène ambiant, des matières premières et du produit en transformation, lors de l'extrusion humide. Préférentiellement en effet, mais ce n'est qu'une option avantageuse, il est avantageux que la matière première ait été également préservée de l'oxydation en amont par l'une ou par plusieurs des méthodes suivantes : contrôle de l'oxygène lors de l'extraction, stockage sous atmosphère inerte, stockage sous froid, ou encore stockage sous vide.

La vis d'extrusion mise en œuvre dans de tels procédés a une configuration qui est différente pour chaque recette et pour chaque site industriel.

Mais on peut considérer que la vis est très souvent divisée en trois sections :
- La première sert à recevoir la matière première, à la préchauffer (généralement en deça de 100 °C), et à la transporter vers la section suivante.
- La seconde section est une section de mélange et de cuisson où la température avoisine généralement les 110-170 °C. Dans cette section, les protéines sont dénaturées et cisaillées.
- Enfin, dans la troisième section, le mélange commence un refroidissement (typiquement dans la gamme 100 - 130 °C) et une compression qui force les protéines à s'aligner pour commencer à créer des fibres. C'est dans cette section que certains procédés de l'art antérieur mettent en œuvre une injection de gaz.
- Le mélange, qui a alors une consistance semi-liquide, est ensuite transféré vers un moule ou filière de refroidissement où la température est abaissée à environ 70 °C, provoquant l'alignement des protéines en forme de fibres et la création d'une texture solide.

Les expérimentations menées par la Demanderesse ont permis de démontrer qu'il est avantageux d'injecter le gaz dans cette troisième section, pour obtenir une dispersion et éviter le contreflux de gaz vers les sections précédentes.

Et comme on le verra plus en détails dans ce qui suit, la présente invention se propose d'obtenir un meilleur contrôle de l'injection de gaz dans de telles vis, et elle propose pour cela de contrôler l'injection de gaz non pas en masse selon la pratique habituelle et selon ce qui apparaitrait comme une logique technique, mais en volume de gaz.

Le gaz injecté est avantageusement mesuré, contrôlé, à l'extérieur de l'extrudeuse, en un point de mesure dit amont. Ce gaz arrive d'une source de gaz se trouvant en amont de l'extrudeuse (par exemple une bouteille), où il se trouve à température ambiante.

Les mesures sont effectuées à cette même température amont, pour ensuite procéder à l'injection dans une zone de l'extrudeuse.

Une fois dans l'extrudeuse, le gaz est chauffé à la température régnant au point d'injection. Ce changement de température va provoquer une expansion du gaz.

Par ailleurs, la pression entre le point de mesure amont et le point d'injection est aussi différente.

L'expansion du gaz est ainsi affectée par ces deux facteurs : pression et température.

La température est relativement constante au point d'injection, pour un essai donné, elle peut varier généralement de 1 à 2 degrés. Quant à la pression, elle peut varier fréquemment de quelques bars selon l'échelle de l'équipement utilisé, la recette et les conditions d'opération.

Or, comme il est bien connu de l'homme du métier, le volume de gaz, par exemple d'azote, varie de manière linéaire avec la température à une pression donnée, alors que le volume de gaz varie de manière exponentielle avec la pression pour une température donnée.

Et c'est le mérite de la présente invention de comprendre, du fait que, lorsque la pression change (la pression à l'intérieur de la vis, au point d'injection), d'une opération d'extrusion à l'autre sous les mêmes conditions opératoires, le niveau d'aération va changer également pour une même masse de gaz injectée.

Et la présente invention propose donc de réguler une telle opération en volume de gaz et non en masse, et ainsi s'assurer que le ratio volumique de gaz injecté dans l'extrudeuse reste le même tout au long du procédé malgré les variations de température et de pression au point d'injection.

On parle ci-dessus de « ratio volumique », i .e du ratio en volume entre le volume de produit protéiné présent dans la vis et le volume de gaz injecté (mesuré/calculé/estimé) au point d'injection.

Et selon un mode de mise en œuvre préféré de l'invention, on procède non pas simplement à une mesure et régulation du volume injecté, mais à un suivi en continu de la pression du gaz en au moins trois points différents du procédé, i.e avant injection, au point d'injection, et en aval de l'injection, et de même à un suivi de la température du gaz, avant injection, au point d'injection, et en aval de l'injection.

Un système d'acquisition et de traitement de données calcule alors automatiquement la quantité de gaz à injecter pour maintenir le ratio volumique constant souhaité.

On rappelera qu'une extrudeuse est traditionnellement composée par une ou des vis d'extrusion et d'une enveloppe qui les entoure. Cette enveloppe est une double paroi dans laquelle circule un fluide caloporteur qui sert à chauffer le produit à extruder.

L'enveloppe est divisée à la fois en plusieurs blocs, on peut dire aussi « fourreaux », qui sont répartis le long de la vis. On peut dès lors réguler la température de chaque élément, et on peut également modifier la configuration de la vis (éléments de transport, de cisaillement, de compression...).

L'injection de gaz se fait par exemple au travers d'une canne qui traverse l'un des blocs (éléments) de l'enveloppe de l'extrudeuse et délivre le gaz directement dans la zone de vis associée en regard.

La température et la pression sont alors mesurées au niveau du point d'injection, et également dans le fourreau précédent, et dans le fourreau suivant, donc en amont et en aval du point d'injection.

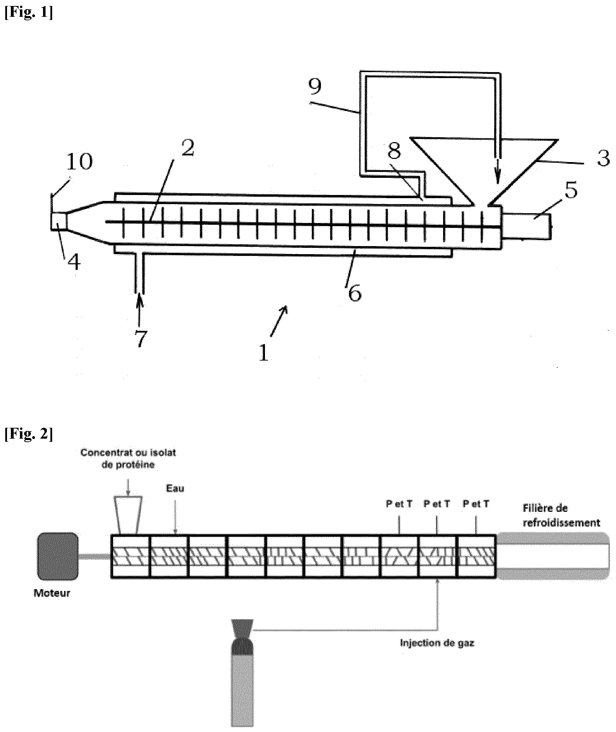

La [Figure 1] annexée illustre par une vue en coupe schématique et partielle, un exemple d'installation d'extrusion de produits alimentaires connue de l'homme du métier.

L'installation (1) est constituée d'une vis d'extrusion (2), d'une trémie d'alimentation (3) et d'une buse de sortie (4). La vis d'extrusion (2) est entraînée par un moteur (5). L'installation (1) comporte également une double enveloppe (6) enveloppant la vis d'extrusion (2). Cette double enveloppe comporte un orifice d'entrée (7) du fluide de refroidissement, ledit fluide circulant tout le long de la double enveloppe autour de la vis d'extrusion jusqu'à l'orifice de sortie (8) relié à un conduit (9) permettant la réinjection du fluide de refroidissement dans la trémie d'alimentation (9) sur le produit alimentaire, autorisant ainsi un recyclage du fluide de refroidissement.

L'installation comprend en outre ici un moyen de coupe (10) situé en sortie de la buse (4) permettant la découpe du produit extrudé et formé en portions régulières.

A l'aide de ce moyen de coupe, l'opérateur peut, en faisant varier la cadence de la coupe et/ou la vitesse d'extrusion, préparer des doses de produits alimentaires calibrées. Si l'on augmente la cadence de coupe les doses seront plus petites, et si l'on diminue la cadence de coupe les doses seront plus importantes. Un tel moyen de coupe peut être notamment un fil à découpe, une lame, un couperet, des ciseaux, un biseau, ou tout autre moyen susceptible de réaliser une coupe nette et rapide du produit alimentaire formé, et notamment un couteau rotatif dont la lame effleure la buse de sortie de l'extrudeuse.

La [Figure 2] annexée illustre par une vue en coupe schématique et partielle, un exemple d'installation convenant pour la mise en œuvre de l'invention.

Et l'on note sur cette figure les moyens permettant d'effectuer des mesures de température et pression du gaz dans l'enveloppe : dans la zone où le gaz est injectée, et dans les deux zones de l'enveloppe précédant et suivant la zone où a lieu l'injection.

Les formes de buses les plus utilisées sont l'étoile, le carré, le rond, le triangle, les chiffres, les lettres et autres personnages, mais l'homme du métier est à même d'imaginer n'importe quelle autre forme susceptible de satisfaire la demande du client final.

La double enveloppe suppose l'association d'une première enveloppe intérieure enveloppant la ou les vis d'extrusion dont une face est en contact direct avec le produit alimentaire, avec une deuxième enveloppe extérieure concentrique à la première de sorte qu'un espace soit ménagé entre la première et la seconde enveloppe. Ainsi, l'espace ménagé entre les deux enveloppes permet la circulation d'un fluide chauffant ou encore réfrigérant. De cette manière, le fluide n'est pas en contact direct avec le produit alimentaire, mais en contact indirect par l'intermédiaire de l'enveloppe intérieure.

Comme on l'a dit plus haut, généralement, la double enveloppe comporte un orifice d'entrée, par lequel on introduit le fluide, et un orifice de sortie par lequel le fluide est évacué ou encore avantageusement le fluide est recyclé comme évoqué dans la [figure 1], soit par réinjection dans la double enveloppe, soit pas injection directe sur le produit alimentaire dans la trémie d'alimentation de l'extrudeuse.

**Selon des** modes connus, l'extrudeuse peut comporter deux vis d'extrusion, par exemple contrarotatives.

La ou les vis d'extrusion(s) peuvent adopter une géométrie particulière, alternant par exemple portions du type « Archimède », permettant l'avancement du produit alimentaire vers la sortie de l'extrudeuse, et portions du type « malaxeuse », permettant le malaxage du produit alimentaire de sorte que l'on obtienne une bonne homogénéisation du produit à l'intérieur de l'extrudeuse. De même, le malaxage du produit alimentaire permet un meilleure répartition de la température au cœur du produit.

De même, certaines vis peuvent comprendre optionnellement une zone de compression, c'est-à-dire par exemple une zone de réduction progressive du pas de vis ou d'augmentation du diamètre de l'arbre de la vis (par exemple un diamètre de l'arbre de la vis croissant à pas de vis constant).

La présente invention concerne alors un procédé de fabrication de produits alimentaires transformés à base de protéines végétales, par extrusion humide dans une vis d'extrusion, avec mise en oeuvre d'un gaz en au moins une zone de la vis, notamment de produits considérés comme des analogues de la viande animale, se caractérisant en ce que l'injection de gaz est contrôlée via une régulation du volume de gaz injecté par rapport à une valeur de consigne souhaitée.

Selon un des modes de mise en œuvre de l'invention, la vis mise en œuvre est divisée en trois sections :
- La première apte à recevoir la matière première, à la préchauffer (généralement en deça de 100 °C), et à la transporter vers la section suivante.
- La seconde section est une section apte à réaliser le mélange et la cuisson du produit, où la température avoisine typiquement les 110-170 °C. Dans cette section, les protéines sont dénaturées et cisaillées.
- Enfin, dans la troisième section, le mélange commence un refroidissement (typiquement dans la gamme 100 - 130 °C) et une compression qui force les protéines à s'aligner pour commencer à créer des fibres ;
- Le mélange, qui a alors une consistance semi-liquide, est ensuite transféré vers une opération aval constituée par un moule ou une filière de refroidissement où la température est abaissée, par exemple à environ 70 °C, provoquant l'alignement des protéines en forme de fibres et la création d'une texture solide ;
l'injection de gaz selon l'invention étant réalisée dans la troisième section.

Le gaz injecté est avantageusement mesuré, contrôlé, à l'extérieur de l'extrudeuse, en un point de mesure dit amont. Ce gaz arrive d'une source de gaz se trouvant en amont de l'extrudeuse (par exemple une bouteille), où il se trouve à température ambiante.

Les mesures sont effectuées à cette même température amont, pour ensuite procéder à l'injection dans une zone de l'extrudeuse.

## Revendications

1. Procédé de fabrication de produits alimentaires transformés à base de protéines végétales, à partir d'une matière première, par extrusion humide dans une vis d'extrusion, avec mise en oeuvre d'un gaz en au moins une zone de la vis, notamment de produits considérés comme des analogues de la viande animale, **se caractérisant en ce que** l'injection de gaz est contrôlée via une régulation du volume de gaz injecté par rapport à une valeur de consigne souhaitée.

2. Procédé selon la revendication 1, **se caractérisant en ce que** l'on procède à un suivi en continu de la pression du gaz en au moins trois points différents du procédé, avant injection dans la vis, au point d'injection, et en aval du point d'injection, et **en ce que** l'on procède également à un suivi de la température du gaz, avant injection dans la vis, au point d'injection, et en aval du point d'injection, et **en ce que** un système d'acquisition et de traitement de données calcule alors la quantité de gaz à injecter pour maintenir un ratio volumique de gaz souhaité.

3. Procédé selon la revendication 1 ou 2, **se caractérisant en ce que** la vis mise en œuvre est divisée en trois sections :
- Une première section apte à recevoir la matière première, à la préchauffer, et à la transporter vers la section suivante.
- Une seconde section apte à réaliser le mélange et la cuisson de la matière et où la température se situe préférentiellement dans la gamme 110-170 °C.
- Et une troisième section apte à réaliser un refroidissement et une compression de la matière.
- Le mélange issu de la troisième section ayant alors une consistance semi-liquide, qui est alors transféré vers une opération aval constituée par un moule ou une filière de refroidissement;
ladite injection de gaz étant réalisée dans la troisième section.

## Revendications modifiées

### Revendications modifiées conformément à la règle 137(2) CBE.

1. Procédé de fabrication de produits alimentaires transformés à base de protéines végétales, à partir d'une matière première, par extrusion humide dans une vis d'extrusion, avec mise en oeuvre d'un gaz en au moins une zone de la vis, notamment de produits considérés comme des analogues de la viande animale, **se caractérisant en ce que** l'injection de gaz est contrôlée via une régulation du volume de gaz injecté par rapport à une valeur de consigne souhaitée, la consigne étant définie en ratio volumique entre le volume de matière première, dite produit protéiné, présente dans la vis et le volume de gaz injecté au niveau de ladite zone, dite point d'injection, le ratio volumique étant le même tout au long du procédé malgré les variations de température et de pression au point d'injection.

2. Procédé selon la revendication 1, **se caractérisant en ce que** l'on procède à un suivi en continu de la pression du gaz en au moins trois points différents du procédé, avant injection dans la vis, au point d'injection, et en aval du point d'injection, et **en ce que** l'on procède également à un suivi de la température du gaz, avant injection dans la vis, au point d'injection, et en aval du point d'injection, et **en ce que** un système d'acquisition et de traitement de données calcule alors la quantité de gaz à injecter pour maintenir un ratio volumique de gaz souhaité.

3. Procédé selon la revendication 1 ou 2, **se caractérisant en ce que** la vis mise en œuvre est divisée en trois sections :
- Une première section apte à recevoir la matière première, à la préchauffer, et à la transporter vers la section suivante.
- Une seconde section apte à réaliser le mélange et la cuisson de la matière et où la température se situe préférentiellement dans la gamme 110-170 °C.
- Et une troisième section apte à réaliser un refroidissement et une compression de la matière.
- Le mélange issu de la troisième section ayant alors une consistance semi-liquide, qui est alors transféré vers une opération aval constituée par un moule ou une filière de refroidissement;
ladite injection de gaz étant réalisée dans la troisième section.
